# EUROPEAN PATENT APPLICATION

(11) **EP 4 668 538 A1**
(43) Date of publication of application: **24.12.2025**
(21) Application number: 25182432.2
(22) Date of filing: 12.06.2025
(51) Int. Cl.: H02J 7/00, H02J 50/00, H02J 50/10, H05K 7/20

(54) **WIRELESS CHARGING DEVICE AND CHARGING METHOD**

(30) Priority: 14.06.2024 CN 202410773408
(71) Applicant: Anker Innovations Technology Co., Ltd., Changsha, Hunan 410000 (CN)
(72) Inventor: SONG, Shuangquan, Shenzhen (CN)
(74) Representative: Steffens, Adrian

(57) **Abstract**

Disclosed are a wireless charging device (100) and a charging method. The wireless charging device (100) includes: a housing (110) whose shape and/or posture is changeable so that the housing (110) is switched between a first form and a second form; a transmitting coil (120) disposed inside the housing (110); and a control module (130) disposed inside the housing (110) and connected to the transmitting coil (120). When the housing (110) is in the first form, the control module (130) controls the transmitting coil (120) to charge the electronic device with a first charging mechanism; and when the housing (110) is in the second form, the control module (130) controls the transmitting coil (120) to charge the electronic device with a second charging mechanism. Charging power of the first charging mechanism is different from charging power of the second charging mechanism. The wireless charging device (100) can be switched between the charging mechanisms according to the form of the housing (110), thereby making full use of heat dissipation capability of the wireless charging device (100), improving charging power as much as possible, and shortening the charging time. (FIG. 2)

## Description

### Field

The present disclosure relates to the technical field of wireless charging, particularly to a wireless charging device and a charging method.

### Background

With the development of wireless charging technology, more and more electronic devices have a wireless charging function. The forms and charging methods of wireless charger products are more and more abundant, and wireless charging power level also rises.

In the related art, some wireless charger products support different forms of charging methods. However, wireless chargers often only have a fixed charging mechanism, so charging efficiency thereof is low.

### Summary

The present disclosure provides a wireless charging device and a charging method capable of improving the charging efficiency as much as possible. The problem is solved by the wireless charging device according to independent claim 1 and a charging method according to a further independent claim. The dependent claims refer to further embodiments.

In a first aspect, a wireless charging device includes: a housing whose shape and/or posture is changeable so that the housing is switched between a first form and a second form; a transmitting coil disposed inside the housing and configured to charge an electronic device; and a control module disposed inside the housing and connected to the transmitting coil. When the housing is in the first form, the control module controls the transmitting coil to charge the electronic device with a first charging mechanism; and when the housing is in the second form, the control module controls the transmitting coil to charge the electronic device with a second charging mechanism. Charging power of the first charging mechanism is different from charging power of the second charging mechanism.

In a second aspect, a charging method applied to a wireless charging device is provided. The wireless charging device includes a housing changeable in shape, and the housing has a first form and a second form. The charging method includes: determining whether the housing is in the first form or the second form; charging an electronic device with a first charging mechanism by the wireless charging device when the housing is in the first form; and charging the electronic device with a second charging mechanism by the wireless charging device when the housing is in the second form. Herein, charging power of the first charging mechanism is different from charging power of the second charging mechanism.

Heat dissipation capability of the housing in the first form may be higher than heat dissipation capability of the housing in the second form, and the charging power of the first charging mechanism may be greater than the charging power of the second charging mechanism.

For the wireless charging device one or any combination of the following may be provided: a heat dissipation surface area of the housing in the first form is greater than a heat dissipation surface area of the housing in the second form; and/or thermal conductivity in the first form is greater than thermal conductivity of the housing in the second form; and/or an angle formed between a heat dissipation surface of the housing in the first form and a horizontal plane is less than an angle formed between a heat dissipation surface of the housing in the second form and the horizontal plane; and/or a heat dissipation hole of the housing is exposed in the first form and is blocked in the second form.

The wireless charging device may further comprise a sensor module connected to the control module and configured to detect whether the housing is in the first form or the second form. The sensor module may comprise at least one of a mechanical switch, a magnetic induction switch, a piezoelectric capacitive switch, a multi-axis sensor, a distance sensor, a light sensor and a temperature sensor.

The wireless charging device may comprise a temperature sensor configured to collect a temperature value of the transmitting coil and/or the control module and connected to the control module. Herein, the control module may be configured to determine whether the housing is in the first form or the second form based on the temperature value collected by the temperature sensor.

The wireless charging device may further comprise a drive module disposed at the housing and configured to drive the housing to change in shape, so that the housing is switched between the first form and the second form. The drive module may be connected to the control module. In this case, when the housing is in the second form and meets a preset condition, the control module may control the drive module to start such that the drive module drives the housing to switch from the second form to the first form.

The first form may be a separated form and/or the second form may be a combined form. The first form may be an unfolded form (or a further unfolded form) and/or the second form may be a folded form.

The housing may include a first (outer) housing and a second (outer) housing hinged to each other. Preferably, a (non-zero and/or acute) angle is formed between the first housing and the second housing in the first form.

The first housing may comprise a storage cavity, which is preferably configured to accommodate the second housing.

The control module may be configured to control the transmitting coil to charge with the first charging mechanism based on a closure signal and/or the first housing and the second housing being close to each other (if the first housing and the second housing are close to each other), e.g., if an angle between the first housing and the second housing is smaller than a threshold angle.

The control module may be configured to control the transmitting coil to charge with the second charging mechanism based on a cutoff signal and/or the first housing and the second housing being separated from each other (if the first housing and the second housing are separated from each other), e.g., if an angle between the first housing and the second housing at least a threshold angle.

The threshold angle may for example be between 1° and 30°. The closure signal and/or the cutoff signal may be generated by a (mechanical) switch, which may preferably be configured to be pressed when the first housing and/or the second housing are close to each other.

The charging method may further comprise acquiring temperature values of the wireless charging device during charging, and determining whether the wireless charging device is in the first form or the second form based on the temperature value.

Advantageous effects: the housing of the wireless charging device according to an embodiment of the present disclosure has different forms, and the different forms may have different heat dissipation effects. Therefore, by making the different forms correspond to different charging mechanisms, the wireless charging device can be switched between the charging mechanisms according to the form of the housing, thereby making full use of heat dissipation capability of the wireless charging device, improving charging power as much as possible, and shortening the charging time.

### Brief Description of Drawings

In order to more clearly illustrate technical solutions of embodiments of the present disclosure, drawings that need to be used in the embodiments are briefly introduced below, and it will be apparent in to those of ordinary skill in the art that the drawings in the following description are only some embodiments of the disclosure, and other drawings can be obtained in accordance with these drawings without inventive work.
- FIG. 1: is a schematic structural diagram of a wireless charging device according to an embodiment of the present disclosure;
- FIG. 2: is a schematic structural diagram of a wireless charging device according to another embodiment of the present disclosure;
- FIG. 3: is a schematic structural diagram of a wireless charging device according to yet another embodiment of the present disclosure;
- FIG. 4: is a schematic structural diagram of a wireless charging device placed vertically according to an embodiment of the present disclosure;
- FIG. 5: is a schematic structural diagram of a wireless charging device placed horizontally according to an embodiment of the present disclosure;
- FIG. 6: is a flowchart of a charging method according to an embodiment of the present disclosure; and
- FIG. 7: is a flowchart of a charging method according to another embodiment of the present disclosure.

Description of reference signs: 100: wireless charging device; 110: housing; 111: first outer housing; 112: second outer housing; 1121: third outer housing; 1122: fourth outer housing; 120: transmitting coil; 130: control module; 140: sensor module.

### Detailed Description

In order to make the object, technical solutions and advantages of the present disclosure more clear and understandable, the present disclosure will be described in detail with reference to the accompanying drawings and embodiments. It should be understood that the embodiments described here are only used to explain, rather than limiting, the present disclosure.

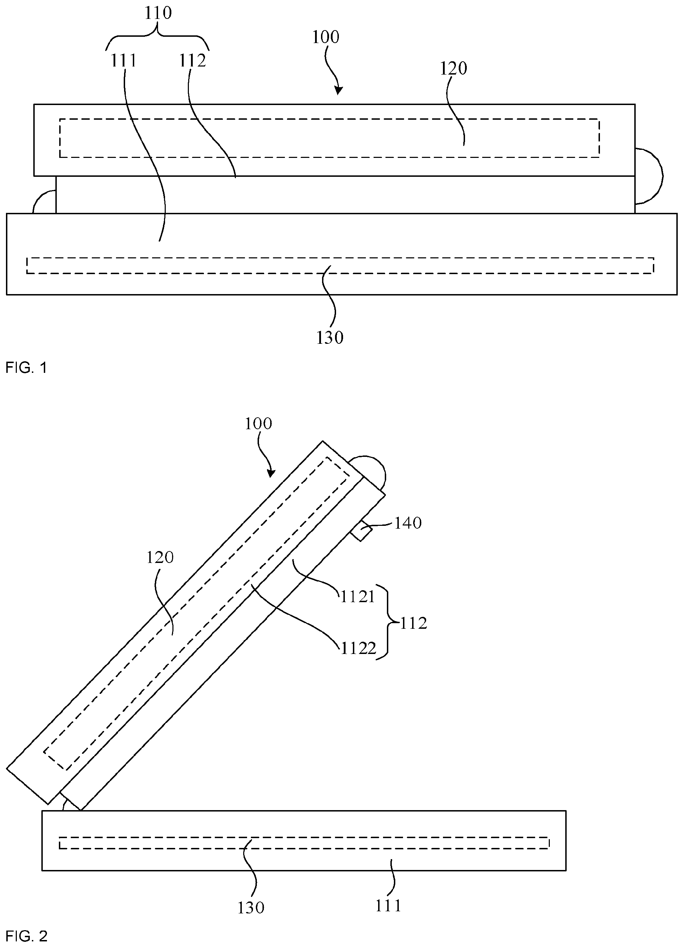

As illustrated in FIGS. 1 to 5, a first aspect of embodiments of the present disclosure provides a wireless charging device 100. The wireless charging device 100 can perform wireless charging on electronic devices, such as mobile phones, tablets, smart watches, and headphones.

The wireless charging device 100 includes a housing 110, a transmitting coil 120, and a control module 130.

The housing 110 has a first form and a second form. It should be noted that the form includes a shape and a posture, that is, a shape of the housing 110 can be changed, or a posture of the housing 110 can be changed, or the shape and the posture of the housing 110 can be changed simultaneously, so that the wireless charging device 100 can be switched between the first form and the second form. When the shape of the housing 110 is changed, an appearance of the housing 110 in the first form is different from that in the second form. When the posture of the housing 110 is changed, the appearance of the housing 110 in the first form is the same as that in the second form, but placement modes thereof are different.

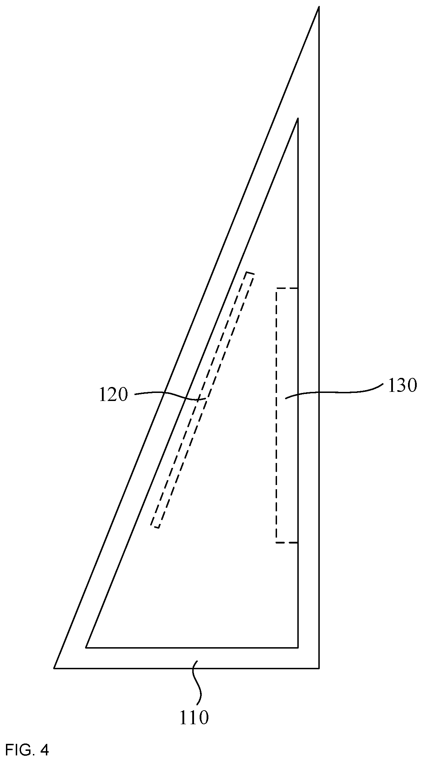

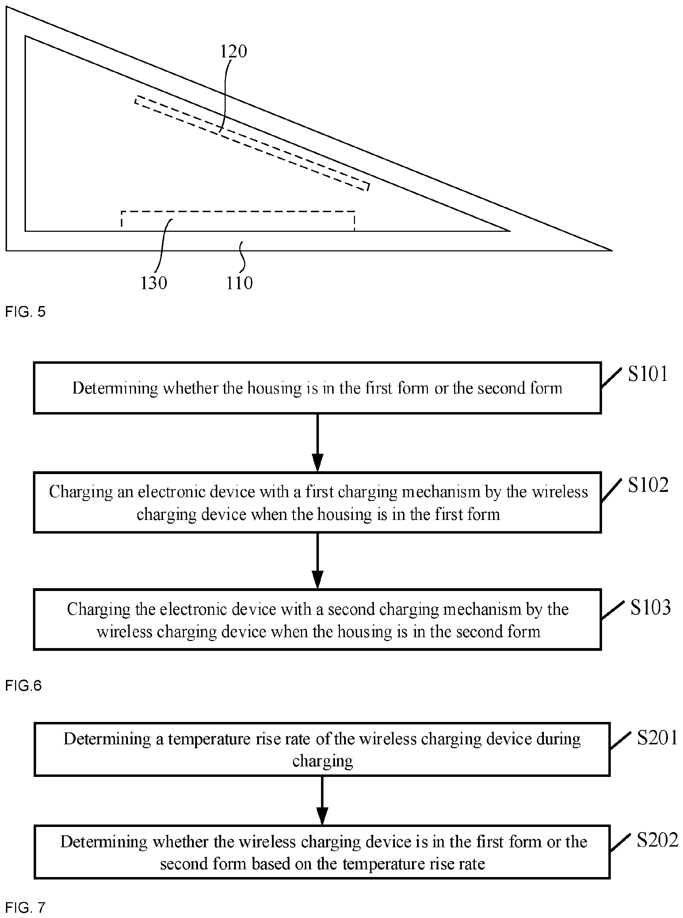

For example, as illustrated in FIGS. 1 to 3, the housing 110 can have a folded form and an unfolded form. When the housing 110 is in the folded form, the housing 110 is compact in structure and small in size, and is easy to carry. When the housing 110 is in the unfolded form, the size thereof is increased, presenting high support performance for an electronic device. For example, as illustrated in FIGS. 4 and 5, the housing 110 can be placed vertically or horizontally. As illustrated in FIG. 4, when placed vertically, the housing 110 occupies a smaller area on a desktop, and as illustrated in FIG. 5, when placed horizontally, the housing 110 has better stability. By adjusting the housing 110 to be placed vertically or horizontally, a support angle of the electronic device can be adjusted. A material of the housing 110 can be plastic, which makes manufacturing costs thereof lower and is easy to be processed into different shapes. The material of the housing 110 can also be metal, so that the housing 110 has higher strength, a longer service life, and a relatively better heat dissipation effect.

The transmitting coil 120 is disposed inside the housing 110, so that the housing 110 can play a certain protective role for the transmitter coil 120. The transmitting coil 120 is configured to charge the electronic device. The electronic device includes a receiving coil, which can sense a magnetic field generated by the transmitting coil 120 and convert the magnetic field into electrical energy, thereby charging the electronic device. To prevent the housing 110 from blocking a pulse signal emitted by the transmitting coil 120, the material of the housing 110 in a position corresponding to the transmitting coil 120 is a non-metal material such as plastic or glass, so that the pulse signal can pass through the housing 110.

The control module 130 is disposed inside the housing 110 and is connected to the transmitting coil 120. The control module 130 can control the transmitting coil 120 to emit different pulse signals to change charging parameters of the wireless charging device 100 such as an output voltage and an output current. Of course, the receiving coil may have a function of sending signals, and the transmitting coil 120 may have a function of receiving signals, so that the control module 130 can communicate with the electronic device through the transmitting coil 120 to negotiate charging protocols.

It is understandable that the transmitting coil 120 and the control module 130 generate heat during working, and thus the wireless charging device 100 generates heat during charging. If the heat of the wireless charging device 100 is not dissipated in time, the wireless charging device 100 will have an excessively high temperature, which affects the service life of the wireless charging device 100 and is likely to burn a user. Therefore, in order to maintain an appropriate temperature of the wireless charging device 100 during charging, charging power of the wireless charging device 100 is limited by the temperature of the wireless charging device 100 during work. When the temperature of the wireless charging device 100 during working is relatively low, the charging power of the wireless charging device 100 can be increased appropriately to improve the charging efficiency; when the temperature of the wireless charging device 100 during working is relatively high, the charging power of the wireless charging device 100 needs to be reduced appropriately to avoid an over temperature of the wireless charging device 100.

It is understandable that the temperature of the wireless charging device 100 during working relates to heat dissipation capability of the wireless charging device 100. The shape of the housing 110 in the first form is different from that in the second form, and thus the heat dissipation capability of the housing 110 in the first form is different from that in the second form. As a result, the charging power of the wireless charging device 100 in the first form and the charging power in the second form can be different, so that the charging power and the form of the wireless charging device 100 match each other.

Therefore, the control module of the embodiment of the present disclosure is configured as follows: when the housing 110 is in the first form, the control module controls the transmitting coil 120 to charge the electronic device with a first charging mechanism, and when the housing 110 is in the second form, the control module controls the transmitting coil 120 to charge the electronic device with a second charging mechanism. The charging power of the first charging mechanism is different from the charging power of the second charging mechanism. It should be noted that a mode of switching between the first charging mechanism and the second charging mechanism may be automatic switching by the control module 130 or manual switching by the user.

Therefore, the housing 110 of the wireless charging device 100 according to the embodiment of the present disclosure has different forms, and the different forms correspond to the different charging mechanisms. The wireless charging device 100 can be switched between the different charging mechanisms according to the different forms of the housing 110, thereby making full use of the heat dissipation capability of the wireless charging device 100, improving the charging power as much as possible and shortening the charging time.

In some embodiments, the heat dissipation capability of the housing 110 in the first form is higher than the heat dissipation capability in the second form, and the charging power of the first charging mechanism is greater than the charging power of the second charging mechanism, so that the heat dissipation capability of the housing 110 matches the charging power of the transmitting coil 120, thereby improving the charging efficiency of the wireless charging device 100 as much as possible.

It is understandable that the heat dissipation capability of the wireless charging device 100 relates to a heat dissipation area of the housing 110. As the heat dissipation area of the housing 110 increases, the heat exchange capability with air increases and the heat dissipation capability of the wireless charging device 100 increases, so that the wireless charging device 100 can perform charging at relatively higher charging power, thereby improving the charging efficiency. Alternatively, the housing 110 is provided with heat dissipation holes. The heat dissipation capability of the wireless charging device 100 relates to a state of the heat dissipation holes of the housing 110. When the housing 110 is switched from the second form to the first form, the heat dissipation holes change from a blocked state to an exposed state, thereby improving the heat dissipation capability.

Of course, the heat dissipation capability of the wireless charging device 100 also relates to a heat dissipation material of the housing 110. When the housing 110 is switched from the second form to the first form, the heat dissipation area may remain unchanged or decrease, but the heat dissipation capability can also be enhanced. For example, the material of the housing 110 is partially metal and partially plastic. When the housing 110 is switched from the first form to the second form, the heat dissipation area remains unchanged, and a part of the housing 110 exposed outside changes from the plastic part to the metal part, thereby improving the heat dissipation capability of the housing 110.

The heat dissipation capability of the wireless charging device 100 also relates to a position of a heat generation point of the housing 110. When the housing 110 is switched from the second form to the first form, the heat dissipation area may remain unchanged or decrease, but the heat dissipation capability can also be enhanced. For example, a portion of the housing 110 corresponding to the transmitting coil 120 is a main heat-generating portion. When the housing 110 is switched from the second form to the first form, the heat dissipation area remains unchanged, and the main heat-generating portion of the housing 110 changes from being enclosed inside to being exposed outside, thereby improving the heat dissipation capability of the housing 110.

The heat dissipation capability of the wireless charging device 100 also relates to a placement posture of the housing 110. When the housing 110 is switched from the second form to the first form, the heat dissipation area may remain unchanged or decrease, but the heat dissipation capability can also be enhanced. For example, when the housing 110 is switched from the second form to the first form, the heat dissipation area remains unchanged, and the main heat-generating portion of the housing 110 changes from facing downward to facing upward or toward the side, which is conducive to rise of hot air, thereby improving the heat dissipation capability of the housing 110.

In some embodiments, the first form is an unfolded form and the second form is a folded form. Generally speaking, a surface area of the housing 110 in the unfolded form is greater than a surface area of the housing 110 in the folded form, so that the housing 110 has stronger heat dissipation capability in the unfolded form, and the charging power of the transmitting coil 120 can be higher correspondingly.

For example, the housing 110 includes a first outer housing 111 and a second outer housing 112 hinged to each other. The transmitting coil 120 is disposed inside the second outer housing 112, and the control module 130 is disposed inside the first outer housing 111 or inside the second outer housing 112. The second outer housing 112 can rotate relative to the first outer housing 111. As illustrated in FIG. 1, when the second outer housing 112 fits the first outer housing 111, the housing 110 is in the folded form. As illustrated in FIG. 2, after the second outer housing 112 rotates counterclockwise relative to the first outer housing 111, the second outer housing 112 is relatively away from the first outer housing 111. At this time, the housing 110 is in an unfolded form, which has a larger heat dissipation area and a better heat dissipation effect, and the second outer housing 112 can serve as a bracket to support an electronic product.

Optionally, in order that the electronic product fits the second outer housing 112, a magnetic member may be provided inside the second outer housing 112, so that the electronic device and the second outer housing 112 are magnetically attracted together and can be combined or separated conveniently. In addition, the magnetic attraction between the electronic device and the second outer housing 112 is also conducive to aligning the receiving coil of the electronic device with the transmitting coil 120, thereby improving the charging efficiency.

Optionally, the first outer housing 111 is provided with a receiving cavity, and the receiving cavity is configured to receive the second outer housing 112, so as to reduce protrusion of the second outer housing 112 relative to the first outer housing 111 when the second outer housing 112 fits the first outer housing 111. At the same time, the first outer housing 111 can also limit a position of the second outer housing 112, so that the housing 110 is more stable during receiving.

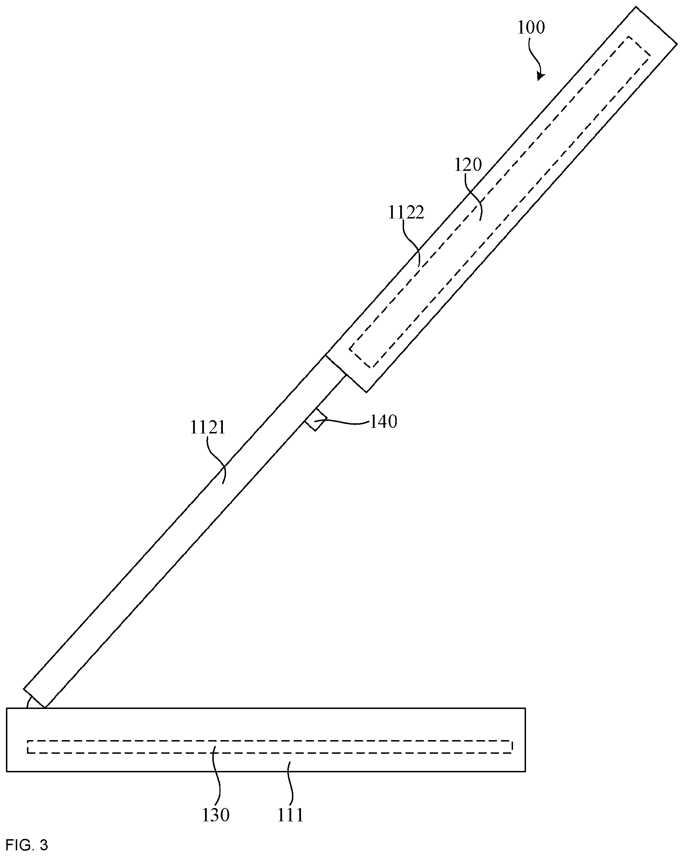

As illustrated in FIG. 2, optionally, the second outer housing 112 includes a third outer housing 1121 and a fourth outer housing 1122. One end of the third outer housing 1121 is hinged to the first outer housing 111, and the other end of the third outer housing 1121 is hinged to the fourth outer housing 1122. The transmitting coil 120 is disposed inside the fourth outer housing 1122, and the third outer housing 1121 is configured to connect the first outer housing 111 and the fourth outer housing 1122, so that the fourth outer housing 1122 can be farther away from the first outer housing 111. As illustrated in FIG. 3, after the fourth outer housing 1122 rotates relative to the third outer housing 1121, the fourth outer housing 1122 is away from the first outer housing 111, at which time the housing 110 is in a further unfolded form and has a larger heat dissipation area, thereby achieving a better heat dissipation effect. At this time, the housing 110 can be considered to be in a third form. When the housing 110 is in the third form, the control module controls the transmitting coil 120 to perform charging with a third charging mechanism. Since the third form is more stretched and has a better heat dissipation effect than the second form, charging power of the third charging mechanism can be greater than the charging power of the second charging mechanism.

It should be noted that the housing 110 may also have other structures. When the housing 110 is switched between the first form and the second form, the housing 110 may be subjected to actions such as stretching, sliding, and bending, which are not limited to rotation.

In some embodiments, the first form is a separated form, and the second form is a combined form. Generally speaking, the surface area of the wireless charging device 100 in the separated form is greater than the surface area of the wireless charging device 100 in the combined form, so that the wireless charging device 100 has stronger heat dissipation capability in the separated form and the corresponding charging power can be higher. For example, the housing 110 may be divided into a fifth outer housing and a sixth outer housing which are detachably connected. There are two control modules 130 and two transmitting coils 120. One of the control modules 130 and one of the transmitting coils 120 are disposed inside the fifth outer housing, and the other of the control modules 130 and the other of the transmitting coils 120 are disposed inside the sixth outer housing, so that the fifth outer housing and the sixth outer housing can perform wireless charging independently.

Optionally, the fifth outer housing and the sixth outer housing are magnetically connected. When the fifth outer housing and the sixth outer housing are magnetically attracted and stacked together, the wireless charging device 100 is easy to carry but has poorer heat dissipation, and the charging power of the wireless charging device 100 is lower. When the fifth outer housing and the sixth outer housing are separated, the heat dissipation is better, and the charging power of the wireless charging device 100 is higher.

In some embodiments, the first form is a vertical placement form and the second form is a horizontal placement form. The heat dissipation capability of the housing 110 in the vertical placement form may be higher or lower than that in the horizontal placement form, which depends on an actual design. For example, when the housing 110 is placed horizontally, on one hand, an angle formed between a heat dissipation surface of the housing 110 and a horizontal plane is smaller, which is more conducive to heat dissipation; and on the other hand, a contact area between the housing 110 and air is smaller, which is not conducive to heat dissipation.

In some embodiments, the wireless charging device 100 further includes a sensor module 140 that is connected to the control module 130. The sensor module 140 is configured to detect whether the housing 110 is in the first form or the second form. By detecting whether the housing 110 is in the first form or the second form through the sensor module 140, the control module 130 can automatically switch between the first charging mechanism and the second charging mechanism without the need for manual switching by the user, reducing operation steps, and making the wireless charging device 100 more convenient to use.

In some embodiments, the sensor module 140 includes at least one of a mechanical switch, a magnetic induction switch, a piezoelectric capacitive switch, a multi-axis sensor, a distance sensor, a light sensor, and a temperature sensor.

For example, when the first outer housing 111 and the second outer housing 112 get close to each other, a mechanical switch is pressing triggered to generate a closing signal; and when the first outer housing 111 and the second outer housing 112 get away from each other, the mechanical switch is released to generate a cut-off signal. When the control module 130 receives the closing signal, the control module 130 controls the transmitting coil 120 to perform charging with the first charging mechanism; when the control module 130 receives the closing signal, the control module 130 controls the transmitting coil 120 to perform charging with the second charging mechanism. Principles of the magnetic induction switch and the piezoelectric capacitive switch are substantially the same as principles of the mechanical switch, that is, states of the switches themselves are changed by changing the relative position between the first outer housing 111 and the second outer housing 112, which will not be described in detail herein.

As another example, a multi-axis sensor is disposed at the second outer housing 112. When the housing 110 is in the first form, the multi-axis sensor faces downward; and when the housing 110 is in the second form, the multi-axis sensor faces upward. The form of the housing 110 is determined by detecting an orientation of the multi-axis sensor. The multi-axis sensor may be, for example, a three-axis sensor or a gyroscope.

As another example, a distance sensor is disposed on the first outer housing 111 or the second outer housing 112, and the distance sensor can detect a distance between the first outer housing 111 and the second outer housing 112. When the housing 110 is in the first form, the distance between the first outer housing 111 and the second outer housing 112 is 2 mm; and when the housing 110 is in the second form, the distance between the first outer housing 111 and the second outer housing 112 is 10 mm. The form of the housing 110 is determined by detecting a sensing distance of the distance sensor. The distance sensor may be, for example, an infrared sensor or an ultrasonic sensor.

As another example, a light sensor is disposed on the first outer housing 111 or the second outer housing 112 and is configured to detect light intensity. When the housing 110 is in the first form, the first outer housing 111 fits the second outer housing 112, and a space between the first outer housing 111 and the second outer housing 112 is in complete darkness, so the light sensor cannot sense light; when the housing 110 is in the second form, the first outer housing 111 and the second outer housing 112 are arranged at intervals, and an indicator light of the wireless charging device 100 is located within a sensing range of the light sensor, so the light sensor can sense light. The form of the housing 110 is determined by detecting the light intensity through the light sensor.

In some embodiments, the sensor module 140 includes a temperature sensor that is connected to the control module 130 and sends collected temperature information to the control module 130. Both the transmitting coil 120 and the control module 130 can generate heat, but a heat dissipation bottleneck of the wireless charging device 100 may be either the transmitting coil 120 or the control module 130, which relates to a structural design of the wireless charging device 100. Therefore, the temperature sensor may only collect a temperature value of the transmitting coil 120, or the temperature sensor may only collect a temperature value of the control module 130, or multiple temperature sensors may be provided and simultaneously collect the temperature values of the transmitting coil 120 and the control module 130, which is set according to actual needs.

Since the heat dissipation capability of the housing 110 is different when the housing 110 is in the first form or the second form, temperature rise rates of the transmitting coil 120 and the control module 130 are different, which can be obtained by calculating a temperature difference over a period of time. Therefore, the control module 130 is configured to determine whether the housing 110 is in the first form or the second form based on the temperature value collected by the temperature sensor. When the temperature rise rate is lower than a set threshold, it is determined that the housing 110 is in the unfolded form; and when the temperature rise rate is higher than the set threshold, it is determined that the housing 110 is in the folded form. For example, when the temperature rise rate is 0.5 °C/min, it is determined that the housing 110 is in the unfolded form; and when the temperature rise rate is 1 °C/min, it is determined that the housing 110 is in the folded form.

In addition, the change in the heat dissipation capability of the housing 110 may cause the temperature values of the transmitting coil 120 and the control module 130 to be different after a certain period of time. Therefore, it is also possible to determine whether the housing 110 is in the first form or the second form by determining the temperature values of the transmitting coil 120 and the control module 130 after a certain period of time. For example, when the temperature value of the transmitting coil 120 after working with the first charging mechanism for ten minutes is 35°C, it is determined that the housing 110 is in the unfolded form; and when the temperature value of the transmitting coil 120 after working with the first charging mechanism for ten minutes is 45°C, it is determined that the housing 110 is in the folded form.

Generally speaking, the wireless charging device 100 is provided with a temperature sensor to monitor the temperature of the wireless charging device 100. Therefore, the form of the housing 110 is determined through the temperature sensor in the embodiment of the present disclosure, without increasing the hardware cost.

In some embodiments, the wireless charging device 100 further includes a drive module disposed at the housing 110 and configured to drive the housing 110 to change in shape, so that the housing 110 is switched between the first form and the second form. The drive module can assist the user in switching the form of the housing 110, thereby reducing operations and making the wireless charging device 100 more convenient to use.

The drive module can be semi-automatic or fully automatic.

For example, the drive module may include a tension spring and a locking switch. The tension spring is disposed between the first outer housing 111 and the second outer housing 112. When the housing 110 is in the first form, the tension spring applies a force to the first outer housing 111 and the second outer housing 112, so that the first outer housing 111 fits the second outer housing 112. When the housing 110 is switched from the first form to the second form, the user needs to apply an external force to stretch the tension spring. When the housing 110 is in the second form, the locking switch locks the first housing 111 and the second housing 112 so that the housing 110 maintains the second form. When the locking switch is pressed, the first outer housing 111 fits the second outer housing 112 under the action of the tension spring, so that the housing 110 is switched to the first form.

For example, the drive module may include a motor disposed at the first outer housing 111, and a shaft of the motor is connected to the second outer housing 112. The motor drives the second outer housing 112 to rotate relative to the first outer housing 111, so that the housing 110 can be switched between the first form and the second form.

In some embodiments, when the housing 110 is in the second form and meets a preset condition, the control module 130 controls the drive module to start so that the drive module drives the housing 110 to switch from the second form to the first form. The preset condition may be a condition in which a charging demand cannot be met, for example, the current heat dissipation capability cannot meet the demand, or the current charging power cannot meet the demand.

For example, when the temperature value of the transmitting coil 120 after working with the first charging mechanism for ten minutes is 45°C or the temperature rise rate is 1 °C/min, it is proved that the heat dissipation cannot meet the demand, and thus it is necessary to switch the housing 110 to the second form. When the temperature of the transmitting coil 120 after working with the first charging mechanism for ten minutes is 35°C or the temperature rise rate is 0.5 °C/min, it is proved that the heat dissipation is good, and thus there is no need to switch the housing 110 to the second form.

As another example, maximum charging power of the first charging mechanism is 10 W, maximum charging power of the second charging mechanism is 5 W, and charging power negotiated between the control module 130 and the electronic device is 7.5 W. When the housing 110 is in the second form, the maximum charging power of the second charging mechanism is 5 W, and at this time, the control module 130 can control the drive module to operate to switch the housing 110 to the first form, thereby controlling the transmitting coil 120 to perform charging with the first charging mechanism.

In this embodiment, the wireless charging device 100 can self-adaptively change the form and switch different charging mechanisms according to temperature or charging power. The different charging mechanisms correspond to different charging modes to maximize the heat dissipation of the housing 110 and improve the charging efficiency.

As illustrated in FIG. 6, a second aspect of embodiments of the present disclosure provides a charging method that is applied to the wireless charging device 100. The wireless charging device 100 includes the housing 110 that is changeable in shape, and the housing 110 has a first form and a second form.

The charging method includes the following S101 to S103.

In S101, it is determined whether the housing 110 is in the first form or the second form.

Whether the housing 110 is in the first form or the second form can be determined by the sensor module 140 or can be confirmed and set manually by the user.

In S102, when the housing 110 is in the first form, the wireless charging device 100 charges an electronic device with a first charging mechanism.

In S103, when the housing 110 is in the second form, the wireless charging device 100 charges the electronic device with a second charging mechanism.

Heat dissipation capabilities of the housing 110 differ when in different forms, and thus correspond to different charging mechanisms. The charging mechanism may include charging parameters such as a charging voltage, a charging current, and a charging time. Charging power of the first charging mechanism is different from charging power of the second charging mechanism, so that the charging power of the wireless charging device 100 matches the form.

As illustrated in FIG. 7, in some embodiments, the charging method further includes the following S201 and S202.

In S201, a temperature rise rate of the wireless charging device 100 during charging is determined.

A heat dissipation bottleneck of the wireless charging device 100 may be either the transmitting coil 120 or the control module 130, which is related to a structural design of the wireless charging device 100. The temperature may be collected through a temperature sensor. The temperature sensor may only collect a temperature value of the transmitting coil 120, or only collect a temperature value of the control module 130, or simultaneously collect the temperature values of the transmitting coil 120 and the control module 130, which is set according to actual needs. The temperature rise rate can be obtained by calculating a temperature difference over a period of time.

In S202, it is determined whether the wireless charging device 100 is in the first form or the second form based on the temperature rise rate.

The control module 130 can determine whether the housing 110 is in the first form or the second form based on the temperature value collected by the temperature sensor. When the temperature rise rate is lower than a set threshold, it is determined that the housing 110 is in an unfolded form; and when the temperature rise rate is higher than the set threshold, it is determined that the housing 110 is in a folded form. For example, when the temperature rise rate is 0.5 °C/min, it is determined that the housing 110 is in the unfolded form; and when the temperature rise rate is 1 °C/min, it is determined that the housing 110 is in the folded form. Generally speaking, the wireless charging device 100 is provided with a temperature sensor to monitor the temperature of the wireless charging device 100. Therefore, the form of the housing 110 is determined through the temperature sensor in the embodiment of the present disclosure, which will not increase the hardware cost.

The same or similar reference numerals in the drawings of the embodiments of the present disclosure correspond to the same or similar parts. In the description of the present disclosure, it is to be understood that the terms "upper", "lower", "left", "right", and the like indicating relationships of directions and positions are based on relationships of directions and positions shown in the drawings, and are intended to be illustrative and simplify descriptions only and not to indicate or imply that the referred assembly or element must be provided in a particular direction, configured and operated in a particular direction. Therefore, the terms used to describe relationships of positions are intended to be illustrative only and are not intended to limit the present disclosure. For those of ordinary skill in the art, specific meanings of the above terms can be understood according to specific situations.

The above are only preferred embodiments of the present disclosure and does not limit the present disclosure. Any modifications, equivalent substitutions and improvements made within the scope of the appended claims should be included in the protection scope of the present disclosure.

## Claims

1. A wireless charging device (100) comprising:
- a housing (110) having a first form and a second form, wherein the shape and/or posture of the housing (110) is changeable so that the housing (110) is switched between the first form and the second form;
- a transmitting coil (120) disposed inside the housing (110) and configured to charge an electronic device; and
- a control module (130) disposed inside the housing (110) and connected to the transmitting coil (120),
wherein, when the housing (110) is in the first form, the control module (130) controls the transmitting coil (120) to charge the electronic device with a first charging mechanism, and, when the housing (110) is in the second form, the control module (130) controls the transmitting coil (120) to charge the electronic device with a second charging mechanism, charging power of the first charging mechanism being different from charging power of the second charging mechanism.

2. The wireless charging device (100) according to claim 1, wherein heat dissipation capability of the housing (110) in the first form is higher than heat dissipation capability of the housing (110) in the second form, and the charging power of the first charging mechanism is greater than the charging power of the second charging mechanism.

3. The wireless charging device (100) according to claim 2, wherein
- a heat dissipation surface area of the housing (110) in the first form is greater than a heat dissipation surface area of the housing (110) in the second form; and/or
- thermal conductivity in the first form is greater than thermal conductivity of the housing (110) in the second form; and/or
- an angle formed between a heat dissipation surface of the housing (110) in the first form and a horizontal plane is less than an angle formed between a heat dissipation surface of the housing (110) in the second form and the horizontal plane; and/or
- a heat dissipation hole of the housing (110) is exposed in the first form and is blocked in the second form.

4. The wireless charging device (100) according to any one of the preceding claims, further comprising a sensor module (140) connected to the control module (130) and configured to detect whether the housing (110) is in the first form or the second form.

5. The wireless charging device (100) according to claim 4, wherein the sensor module (140) comprises at least one of a mechanical switch, a magnetic induction switch, a piezoelectric capacitive switch, a multi-axis sensor, a distance sensor, a light sensor and a temperature sensor.

6. The wireless charging device (100) according to any one of the preceding claims, further comprising a temperature sensor configured to collect a temperature value of the transmitting coil (120) and/or the control module (130) and connected to the control module (130) which is configured to determine whether the housing (110) is in the first form or the second form based on the temperature value collected by the temperature sensor.

7. The wireless charging device (100) according to any one of the preceding claims, further comprising a drive module disposed at the housing (110) and configured to drive the housing (110) to change in shape, so that the housing (110) is switched between the first form and the second form.

8. The wireless charging device (100) according to claim 7, wherein the drive module is connected to the control module (130), and when the housing (110) is in the second form and meets a preset condition, the control module (130) controls the drive module to start such that the drive module drives the housing (110) to switch from the second form to the first form.

9. The wireless charging device (100) according to any one of the preceding claims, wherein the first form is a separated form and the second form is a combined form.

10. The wireless charging device (100) according to any one of the preceding claims, wherein the first form is an unfolded form and the second form is a folded form.

11. The wireless charging device (100) according to any one of the preceding claims, wherein the housing includes a first housing (111) and a second housing (112) hinged to each other, wherein an angle is formed between the first housing (111) and the second housing (112) in the first form.

12. The wireless charging device (100) according to claim 11, wherein the first housing (111) comprises a storage cavity configured to accommodate the second housing (112).

13. The wireless charging device (100) according to claim 11 or 12, wherein the control module (130) is configured to control the transmitting coil 120 to charge with:
- the first charging mechanism based on the first housing (111) and the second housing (112) being close to each other and/or
- the second charging mechanism based on the first housing (111) and the second housing (112) being separated from each other.

14. A charging method applied to a wireless charging device (100), the wireless charging device (100) comprising a housing changeable in shape, the housing (110) having a first form and a second form, the charging method comprising:
- determining whether the housing (110) is in the first form or the second form;
- charging an electronic device with a first charging mechanism by the wireless charging device (100) when the housing (110) is in the first form; and
- charging the electronic device with a second charging mechanism by the wireless charging device (100) when the housing (110) is in the second form,
wherein charging power of the first charging mechanism is different from charging power of the second charging mechanism.

15. The charging method according to claim 14, further comprising:
- acquiring temperature values of the wireless charging device (100) during charging; and
- determining whether the wireless charging device (100) is in the first form or the second form based on the temperature value.
